# EUROPÄISCHE PATENTSCHRIFT

(11) **EP 1 161 749 B1**
(45) Veröffentlichungstag und Bekanntmachung des Hinweises auf die Patenterteilung: **30.06.2010**
(21) Anmeldenummer: 00920393.6
(22) Anmeldetag: 15.03.2000
(51) Int. Cl.: G07F 7/10, G07F 19/00

(54) **VERFAHREN ZUR NUTZUNG VON STANDARDISIERTEN BANKDIENSTLEISTUNGEN ÜBER MOBILFUNK**
METHOD FOR USING STANDARDISED BANK SERVICES VIA THE MOBILE RADIOTELEPHONE SERVICE
PROCEDE D'UTILISATION DE PRESTATIONS BANCAIRES NORMALISEES, PAR TELEPHONIE MOBILE

(30) Priorität: 17.03.1999 DE 19911782
(43) Veröffentlichungstag der Anmeldung: 12.12.2001
(73) Patentinhaber: T-Mobile Deutschland GmbH, 53227 Bonn (DE)
(72) Erfinder: BREITBACH, Thomas, D-56645 Nickenich (DE); CONRAD, Alan, D-53639 Königswinter (DE); MARINGER, Günter, D-53115 Bonn (DE)
(74) Vertreter: Riebling, Günter
(86) Internationale Anmeldenummer: PCT/DE2000/000792
(87) Internationale Veröffentlichungsnummer: WO 2000/055820

(56) Entgegenhaltungen:
- WO-A-97/17678
- WO-A-98/26543
- WO-A-98/47116
- HEINS K ET AL: "CHIPKARTEN SICHERN TRANSAKTIONEN UEBERS INTERNET. AUSGEKLUEGELTE SICHERHEITSMECHANISMEN SCHUETZEN VOR MANIPULATIONEN" ELEKTRONIK,DE,FRANZIS VERLAG GMBH. MUNCHEN, Bd. 47, Nr. 12, 9. Juni 1998 (1998-06-09), Seiten 74-79, XP000847911 ISSN: 0013-5658
- DIFFIE W ET AL: "AUTHENTICATION AND AUTHENTICATED KEY EXCHANGES" DESIGNS, CODES AND CRYPTOGRAPHY,US,KLUWER ACADEMIC PUBLISHERS, BOSTON, Bd. 2, Nr. 2, 1. Juni 1992 (1992-06-01), Seiten 107-125, XP000653208 ISSN: 0925-1022

## Beschreibung

Die Erfindung betrifft ein Verfahren zur Nutzung von standardisierten Bankdienstleistungen über Mobilfunk.

Für die Inanspruchnahme von Bankdienstleistungen werden in zunehmendem Maß papierlose, bequeme Wege der Einreichung und Abfrage nachgefragt. Bankenseitig wird diese Entwicklung wegen der damit erzielbaren Rationaliserungseffekte gefördert und es wurde dazu von der deutschen Kreditwirtschaft ein Verfahren zum bankübergreifenden Homebanking durch den Einsatz von z.B. einem Personal Computer (PC) und einem Festnetzmodem, entwickelt. Diese als HBCI (Home Banking Computer Interface) bezeichnete Verfahren beruht auf einer kryptographischen Ende-zu-Ende Verschlüsselung zwischen einem Personal Computer (Client) auf Kundenseite und dem Bankserver (vgl. Homebanking Computer Interface, Schnittstellenspezifikation, Version 2.0.1. vom 02.02.1998). Die in Deutschland mit unter 10% recht geringe Penetration von PC-Online-Zugängen stellt hier allerdings zunächst ein Hemmnis dar.

Der Mobilfunk mit ca. 15 Millionen Kunden und hohen Wachstumsraten ist erheblich weiter verbreitet. Hier liegt ein möglicher Schlüssel für einen massenmarktfähigen elektronischen Zugang zu Banktransaktionen. Hinzu kommt für den Kunden die Möglichkeit, auch mobil Zugang zu Bankgeschäften zu erlangen.

Der HBCI-Standard ist in der deutschen Bankenwelt als Plattform für Homebanking vorgesehen. Es bietet sich an, auf diesen Standard auch im Kontext von mobilfunkgestütztem Banking aufzusetzen. Leider ist das für das Internet konzipierte HBCl-Protokoll zu umfangreich für eine direkte Abbildung auf die heutige GSM-Mobilfunkwelt. Dies betrifft sowohl die für die Datenübertragung notwendige Bandbreite, als auch die benötigte Speicherkapazität und Rechenleistung auf Seite des Mobilfunkteilnehmers bzw. dessen Mobilstation.

Den nächstkommenden Stand der Technik definiert die WO-A-97 17678. Es ist ein System zur Durchführung einer elektronischen Bezahltransaktion zwischen zwei oder mehreren Parteien offenbart, die alle über ein hierfür geeignetes Terminal verfügen. Jede Partei verwendet ein elektronisches Zahlungsprotokoll, wobei sich die verwendeten Protokolle der einzelnen Parteien voneinander unterscheiden können. Damit dennoch eine Bezahltransaktion durchgeführt werden kann, ist ein Zahlungs-Gateway eingerichtet, das über verschiedene Interfaces verfügt, welche die einzelnen Zahlungsprotokolle unterstützen und für eine Konvertierung der Protokolldaten von einem Format in ein anderes Format sorgen.

Der Aufsatz von Heins, K. et al. "Chipkarten sichern Transaktionen übers Internet", aus der Zeitschrift Elektronik 12/1998, DE, Franzis Verlag GmbH, Seiten 74-79, befasst sich mit der Anwendung und den Vorteilen von chipkartengestützten HBCI (Home Banking Computer Interface)-Nachrichtenübertragungsverfahren. Eine Anwendung dieses Verfahrens zusammen mit mobilfunkgestützten Verfahren ist jedoch nicht erwähnt.

Die WO-A-98 47116 betrifft ein elektronisches Bezahlsystem, bei dem ein Kunde über ein mobiles oder ortsfestes Terminal Bezahltransaktionen durchführen kann. Der Kunde stellt dazu eine Verbindung zu einem Service-Gateway her, das die Bezahltransaktion direkt zwischen dem Kreditinstitut des Kunden und dem Kreditstatut des Händlers steuert und abwickelt.

Aus der WO-A-98 26543 ist ein System für die Internet-Telefonie bekannt geworden, wobei ein Gateway vorgesehen ist, das die Verbindung zwischen dem Internet und dem Telefonnetz herstellt.

Es ist Aufgabe der Erfindung, ein Verfahren vorzuschlagen, welches die Nutzung von standardisierten Bankdienstleistungen über Mobilfunk erlaubt, wobei herkömmliche Mobilstationen ohne Zusatzgeräte als kundenseitige HBCI-Plattform eingesetzt werden können.

Diese Aufgabe wird durch die in Anspruch 1 angegebenen Merkmale gelöst.

Grundidee dieser Erfindung ist die Verteilung des kundenseitigen HBCl-Systems auf zwei Komponenten - die in der Mobilstation verwendete SIM-Karte (Teilnehmeridentitätsmodul) und einen HBCl-Gateway.

Es werden dazu zwei Übertragungsstrecken gebildet, erstens zwischen SIM-Karte und HBCI-Gateway und zweitens zwischen HBCl-Gateway und Bankserver. Auf beiden Teilstrecken wird eine kryptographische Sicherung realisiert.

Der HBCl-Gateway wird also in den Übermittlungsweg eingefügt. Dieser entpackt das HBCl-Protokoll und wandelt den Protokollablauf derart, dass eine Verträglichkeit mit der GSM-SIM-Karte und dem GSM-Netzstandard erwirkt wird. Der HBCl-Gateway schliesslich tauscht das gewandelte Protokoll mit einer kundenseitig verwendeten SIM-Karte aus. Es erfolgt demnach eine Transformation zwischen dem bankenseitig verwendeten HBCl und einem auf der Mobilfunkseite verwendeten Übertragungsprotokoll. Die Aufgabe des HBCI-Gateways ist im wesentlichen die Reduktion der zu übertragenden Daten auf ein GSM-kompatibles Maß.

Als Trägerdienst für den Informationsaustausch zwischen HBCl-Gateway und Mobilfunkteilnehmer kann z.B. der Short Message Service oder GPRS dienen.

Aus Sicht des Bankservers wird komplett ein standardkonformes HBCl-Protokoll genutzt, wobei zwischen Bankserver und HBCl-Gateway das durch HBCl definierte Sicherheitsprotokoll Anwendung findet. Zwischen HBCl-Gateway und SIM-Karte wird ein anderes Sicherheitsprotokoll verwendet. Dieses entspricht einem vom Datenumfang her reduzierten, aber sicherheitstechnisch HBCl äquivalenten Protokoll.

Anstelle des beim online-banking üblichen PCs übernimmt nun die SIM-Chipkarte die Funktionen des Kundensystems, sowohl was den Benutzerdialog, als auch was die Sicherheitsfunktionen angeht. Ermöglicht wird dies durch eine neue, standardisierte Technologie mit Namen SAT (SIM Application Toolkit), welcher es der Mobilfunk-Chipkarte (SIM-Karte) erlaubt, die Rolle der Dienstesteuerung wahrzunehmen.

Sowohl die SIM-Karte als auch der Bankrechner kommuniziert jeweils direkt ausschließlich mit dem HBCI- Gateway; dieser nimmt also eine Proxy-Funktion, d.h. eine stellvertretende Funktion des jeweiligen Gegenübers wahr.

Die erwähnte Transformation bringt auch eine Transformation der verwendeten Sicherheitsmechanismen mit sich; während zwischen dem Gateway und der Bankenwelt das HBCI-Protokoll angewendet wird, wird GSM-seitig ein eigenes Sicherheitsprotokoll verwendet.

Gemäß der Erfindung ist vorgesehen, dass ein Verfahren zur Anwendung kommt, das es ermöglicht, kryptographische Schlüssel nach der SIM-Kartenpersonalisierung sicher in der SIM-Karte zu generieren und zu speichern. Hierzu wird vom HBCI-Gateway bzw. der Bank ein spezieller PIN Brief erzeugt. Die Eingabe der PIN am Mobiltelefon generiert den kundenspezifischen Schlüssel in der SIM-Karte.

Auf diese Weise wird ein sicherer, verschlüsselter Kommunikationsweg zwischen HBCI-Gateway und SIM-Karte ohne Gefährdung durch "man in the middle" Attacken, z.B. durch den Netzbetreiber, aufgebaut.

Nachfolgend wird die Erfindung anhand eines Ausführungsbeispiels unter Bezugnahme auf mehrere Zeichnungsfiguren erläutert.
Dabei gehen aus den Zeichnungen und ihrer Beschreibung weitere Merkmale und Vorteile der Erfindung hervor.
- Figur 1: zeigt schematisch die erfindungsgemäss für die Bankdienstleistungen über Mobilfunk benötigten Einrichtungen.
- Figur 2: zeigt beispielhaft ein Ablaufdiagramm für die erstmalige Freischaltung der Bankdienstleistungen über online-Subscription.

Das folgende Ausführungsbeispiel basiert auf der RDH-Variante für HBCI und auf einer symmetrischen Triple-DES Lösung (DES = Data Encryption Standard) auf GSM-Seite.

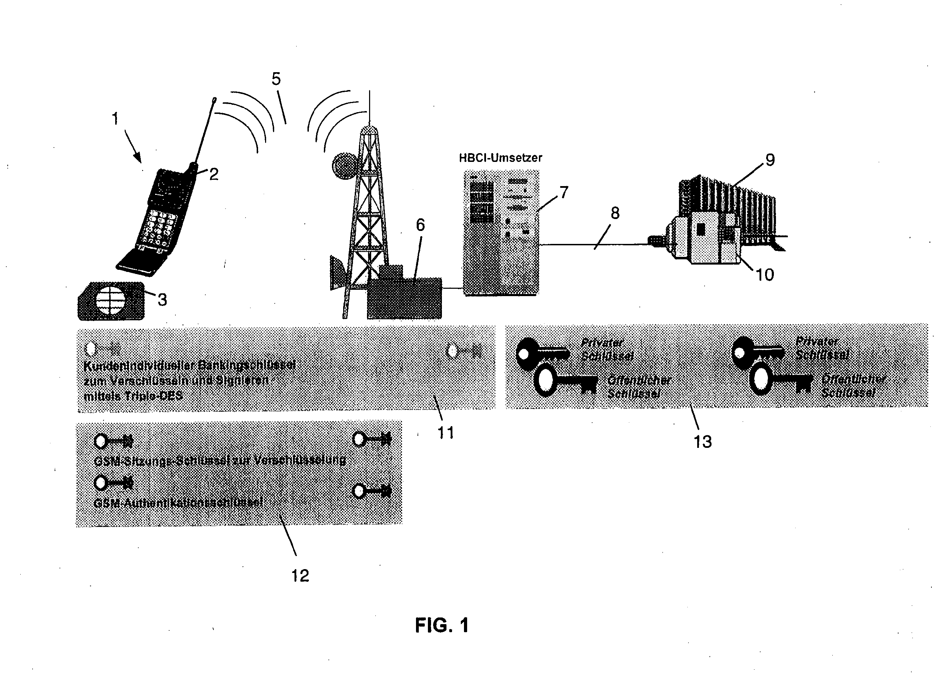

In Figur 1 sind schematisch die am beschriebenen Verfahren beteiligten Einrichtungen gezeigt. Es ist eine Mobilstation 1, bestehend aus Endgerät 2 und Teilnehmeridentitätsmodul 3 (SIM) gezeigt, mittels welcher ein Mobilfunkteilnehmer mit dem Mobilfunknetz, dargestellt als Basisstation 6 über die Luftschnittstelle 5 kommunizieren kann.

Für die Nutzung von Dienstleistungen muss der Mobilfunkteilnehmer über das Mobilfunknetz mit seiner Bank 9 in Verbindung treten. Die Bankdienstleistung werden über einen speziellen Bankserver 10 abgewickelt, welcher ein nach dem HBCl-Standard definiertes Protokoll zur elektronischen Kommunikation mit dem Teilnehmer benutzt.

Auf der GSM-Luftschnittstelle 5 kommt die GSM-Standardverschlüsselung 12 zur Anwendung. Darüber liegt auf Applikationsebene eine Triple-DES Verschlüsselung 11, welche die Strecke zwischen SIM-Karte 3 und HBCI-Gateway 7 absichert. Die Strecke zwischen HBCI-Gateway 7 und Bank 9 bzw. Bankserver 10 unterliegt dem Standard-HBCI-Protokoll in der RDH-Variante, wobei ein asymmetrisches RSA-Verschlüsselungsverfahren 13 angewendet wird.
Da der HBCI-Gateway 7 sicherheitsrelevante Funktionen wahrnimmt, besteht die Möglichkeit, daß er direkt in den Bankrechenzentren betrieben wird. Die Einrichtung des HBCI-Gateways beim jeweiligen Netzbetreiber ist ebenfalls möglich.
Zur Sicherung der Strecke zwischen HBCI-Gateway 7 und SIM-Karte 3 ist es erforderlich, einen geheimen Schlüssel Ksms zwischen dem Gateway 7 und der SIM-Karte 3 zu definieren. Um die Geheimhaltung des Schlüssels Ksms absolut sicherzustellen, wird ein Verfahren vorgeschlagen, bei welchem die Bank per PIN-Brief eine Initialisierungs-PIN an den Mobilfunkteilnehmer versendet, welchen der Teilnehmer einmalig am Mobiltelefon 2 eingibt. In der SIM 3 sowie im HBCI-Gateway 7 wird daraus mittels eines geeigneten Algorithmus der Schlüssel Ksms abgeleitet. Damit ist sichergestellt, daß Dritte keine Kenntnis dieses Schlüssels haben. Weiter unten wird das Sicherungsverfahren ausführlich dargestellt.

Dem Teilnehmer können z.B. die Geschäftsvorfälle Kontostandsabfrage, letzte Umsätze und Überweisungsauftrag angeboten werden. In jedem Fall erfolgt eine Verschlüsselung der Nachrichten mit Ksms.
Aktionen werden üblicherweise vom Nutzer über die Bedienersteuerung des Mobiltelefons 2 angestoßen.
Dazu kann zum Beispiel von der SIM-Karte 3 ein eigener Menüpunkt z.B. "Mobile Banking" am Endgerät eingestellt werden. Wird der eingerichtete Menüpunkt angewählt, können z.B. die Unterpunkte "Kontostand", "Umsätze", "Überweisung" und "Konfiguration" angeboten werden.

Aufgrund dessen, dass die begrenzten Möglichkeiten einer Mobiltelefon-Tastatur nach einer optimierten Benutzerführung verlangen, kann als Option vorgesehen sein, dass insbesondere die eigene Bankverbindung in der SIM-Karte 3 abgelegt ist, so daß diese nur einmalig eingegeben werden muß.
Um sicherzustellen, daß Unbefugte nicht in die Lage versetzt werden, Banktransaktionen zu veranlassen, sollte bei jeder Transaktionsanforderung eine lokale PIN abgefragt werden. Diese PIN wird lokal von der Karte verwaltet.

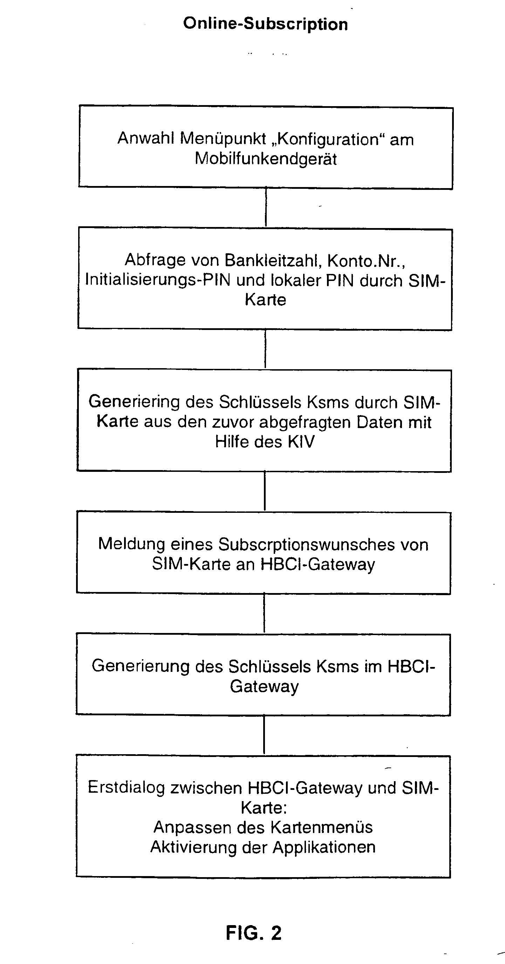

Nachfolgend wird ein Beispiel für den Ablauf der Subskription des Teilnehmers angegeben.
- Die Freischaltung des Banking-Dienstes erfolgt gemäss Darstellung in Figur 2 durch Anwahl eines eingerichteten Menüpunktes "Konfiguration" (s.o.); hierauf werden in einem nächsten Schritt die BLZ und Konto-Nummern der eigenen Konten abgefragt, sowie Initialisierungs-PIN und lokale PIN für die Bankanwendung. Die Daten der eigenen Bankverbindungen werden auf der Karte abgespeichert. In einem weiteren Schritt wird aus der Initialisierungs-PIN und einem aus einem Masterschlüssel abgeleiteten Initialisierungsschlüssel KIV von der Karte ein Schlüssel Ksms zur Sicherung der Kommunikation zwischen HBCl-GSM-Gateway und SIM-Karte berechnet. Die Abfrage der lokalen (Karten-) PIN dient dem Schutz gegen unauthorisierte Subskriptionsversuche.
- Nach der Berechnung von Ksms meldet die SIM-Karte dem HBCI-Gateway den Subskriptionswunsch. Hierauf erfolgt die lokale Schlüsselgenerierung am HBCI-Gateway sowie der Erstdialog mit dem HBCl-Bankensystem. Ferner sendet der HBCI-Gateway eine Nachricht zur Karte, welche das Anpassen des Bankmenü-Titels und das vollständige Aktivieren der Applikation bewirkt.

### Sicherheit

Eine sehr wichtiges Merkmal des beschriebenen Verfahrens ist die Sicherheit. Ziel des Sicherheitskonzeptes ist vor allem, einen Mißbrauch zu verhindern (Authentifikation des Kunden). Desweiteren ist es wichtig, die Vertraulichkeit der übertragenen Daten zu gewährleisten (Verschlüsselung der Übertragung). Beide Anforderungen werden mittels kryptographischer Verfahren realisiert.

### Sicherheitsbereiche

Die gesamte Strecke vom Mobiltelefon 1 des Kunden bis zum HBCI-Server 10 der Bank ist in zwei Sicherheitsbereiche aufgegliedert. Der erste Bereich erstreckt sich vom der SAT-SIM-Karte 3 bis zum HBCI-Gateway 7. Die Strecke vom HBCI-Gateway 7 zum Bankenserver 10 bildet den zweiten Sicherheitsbereich.

### Sicherheitsbereich 1: SAT-SIM zu HBCI-Gateway

Die Sicherheitsfunktionen dieses Bereiches werden im wesentlichen durch Vergabe und Verwendung eines speziellen Schlüssels Ksms bestimmt. Mit diesem 128 Bit langen Triple-DES Schlüssel 11 werden alle zwischen SAT-SIM 3 und HBCl-Gateway 7 ausgetauschten Nachrichten verschlüsselt und signiert.
Der Ksms sichert die Verbindung von der SIM 3 bis zum HBCI-Gateway 7. Der Ksms authentifiziert sowohl den Teilnehmer als auch das HBCI-Gateway und wird auch zur Verschlüsselung dieser Strecke verwendet. Der Ksms ist ein spezifischer Schlüssel der Bankenapplikation und bleibt dem Netzbetreiber verborgen. Um dies zu gewährleisten, wird z.B. folgendes Verfahren zur Erzeugung angewandt:

Bei der Kartenpersonalisierung wird vom Netzbetreiber zusammen mit der Bankenapplikation ein KIV zur Erzeugung der kundenspezifischen Ksms auf alle Karten aufgebracht. Der KIV wird mit Hilfe eines Masterschlüssels und einer SIM-Kartenidividuellen Zahl erzeugt. Der Teilnehmer erhält vor Subskription des Dienstes die Daten seiner Bank inklusive einer 20-stelligen PIN. Bei der Initialisierung der SAT-Applikation (online-Subskription) wird aus der PIN mit Hilfe des KIV der eigentliche Kundenschlüssel Ksms erzeugt (verschlüsseln der PIN, der Bankleitzahl und der Kontonummer per Triple-DES mit KIV als Schlüssel).
Zur Erzeugung des Ksms im HBCI-Gateway 7 muß die PIN auch zum Gateway-Betreiber weitergereicht werden. Optional bietet sich die Erzeugung der PIN am HBCI-Gateway und die Weitergabe an die Bank an.
Die Authentifikation zwischen Teilnehmer und HBCI-Gateway erfolgt durch Wissen über die schriftlich ausgetauschte PIN. Zwischen Netzbetreiber und HBCI-Gateway-Betreiber muß zusätzlich ein Masterkey zur Erzeugung der KIV's ausgetauscht werden. Dieser Masterkey authentifiziert damit zusätzlich das HBCI-Gateway. Optional kann darüber hinaus noch eine zusätzliche Authentifikation des Kunden über die Kennung seines Mobilanschlusses erfolgen:
Es kann beim HBCI-Gateway die Auswertung der Calling-Line-Identification (CLI) der versendeten SAT-SIM erfolgen. Dazu muß die Mobilfunkrufnummer des Kunden im HBCI-Gateway verwaltet werden.

### Sicherheitsbereich 2: HBCI-Gateway zum Kreditinstitutsystem

Auf der Schnittstelle vom HBCI-Gateway 7 zur Bank 9 kommt ein unmodifiziertes HBCI-Protokoll zur Anwendung. In der hier dargestellten Ausgestaltung kommt die RDH-Variante zum Einsatz. Im Modell der HBCl-Spezifikation stellt das HBCI-Gateway das Kundensystem dar. Auf dem HBCI-Gateway sind die öffentlichen und privaten Signier- und Chiffrierschlüssel für jeden Kunden gespeichert.
Der Mechanismus der Authentifikation der öffentlichen Kunden- sowie Bankenschlüssel muß in einer vertraglichen Regelung zwischen Betreiber des HBCI-Gateways 7 und dem Betreiber des Bankenservers 10 erfolgen. Sollte kein implizites Vertrauensverhältnis zwischen diesen Parteien bestehen, können Ini-Briefe oder auch Zertifikate eingesetzt werden.

Die nachfolgende Tabelle gibt eine Übersicht über die im Verfahren verwendeten Schlüssel

| Schlüssel | Verwendung | Generierung | Aufbewahrungsorte | Kenntnis durch |
|---|---|---|---|---|
| Ki | GSM-Authentisierung Luftschnittstelle | Netzbetreiber bei Kartenpersonalisierung | SIM, Authentication Center Netzbetreiber | Netzbetreiber |
| Kc | GSM Verschlüsselung Luftschnittstelle | Netz + SIM bei Verbindungsaufbau | Mobiltelefon + GSM-Netz | Netzbetreiber |
| CKpub | HBCI public key (Verschlüsselung) des Kunden | HBCI-Gateway bei Subskription | HBCl-Gateway, Bank | Gateway-Betreiber, Bank |
| CKpriv | HBCl private key (Verschlüsselung) des Kunden | HBCI-Gateway bei Subskription | HBCl-Gateway | Gateway-Betreiber |
| AKpub | HBCI public key (Authentifikation) des Kunden | HBCI-Gateway bei Subskription | HBCI-Gateway, Bank | Gateway-Betreiber |
| AKpriv | HBCI private key (Authentifikation) des Kunden | HBCI-Gateway bei Subskription | HBCl-Gateway | Gateway-Betreiber |
| CBpub | HBCI public key (Verschlüsselung)der Bank | | Bank, HBCI-Gateway | Gateway-Betreiber, Bank |
| CBpriv | HBCI private key (Verschlüsselung)der Bank | | Bank | Bank |
| ABpub | HBCI public key (Authentifikation) der Bank | | Bank, HBCl-Gateway | Gateway-Betreiber, Bank |
| ABpriv | HBCl private key (Authentifikation) der Bank | | Bank | Bank |
| KIV | Initialisierungsschlüssel | Netzbetreiber | SIM-Karte | SIM-Karte, HBCl-Gateway |
| Ksms | Verschlüsselung und Authentifikation SAT-SIM zum Gateway | HBCl-Gateway vor Subskription sowie SAT-SIM bei Subskription | HBCl-Gateway, SAT-SIM | Gateway-Betreiber, indirekt auch Kunde |

Das vorgeschlagene Verfahren bietet ein hohes Sicherheitsniveau. Die beteiligten technischen Komponenten (SIM, Mobiltelefon, HBCI-Gateway) sind weitaus weniger anfällig gegen Mißbrauch als etwa ein Personal Computer. Aus Sicht des Teilnehmers wird mit dem vorliegenden technischen Konzept ein neuartiger Dienst angeboten, welcher mit einem hohen Sicherheitsstandard einhergeht.

## Patentansprüche

1. Verfahren zur Nutzung von standardisierten Bankdienstleistungen über Mobilfunk, bei dem die Datenübertragung zwischen einem Bankserver (10) einer Bank (9) und einer Mobilstation (1) eines Mobilfunknetzes (6) auf einem HBCI-Übertragungsverfahren aufbaut,
wobei ein HBCI-Gateway (7) in den Übermittlungsweg zwischen dem Bankserver (10) und der Mobilstation (1) geschaltet wird, das eine Transformation zwischen dem bankenseitíg verwendeten HBCI-Übertragungsverfahren und einem auf der Mobilfunkseite verwendeten Übertragungsverfahren vornimmt, wobei eine Aufspaltung des mobilfunkseitigen HBCI-Systems in zwei Komponenten, einer SIM (3) der Mobilstation (1) und das HBCI-Gateway (7) , erfolgt, und dass zwei Übertragungsstrecken gebildet werden, erstens zwischen SIM (3) und HBCI-Gateway (7) und zweitens zwischen HBCI-Gateway (7) und Bankserver (10), wobei zwischen dem Bankserver (10) und dem HBCI-Gateway (7) ein durch HBCI definiertes Sicherheitsprotokoll und zwischen dem HBCI-Gateway (7) und einem Teilnehmeridentitätsmodul SIM (3) der Mobilstation (1) ein zweites, kryptographisches Sicherheitsprotokoll verwendet wird, das einem vom Datenumfang her reduzierten aber sicherheitstechnisch dem HBCl Protokoll äquivalenten Protokoll entspricht, wobei ein kryptographischer, teilnehmerspezifischer Schlüssel (Ksms) zur Verwendung im zweiten Sicherheitsprotokoll nach einer regulären Personalisierung der SIM (3) sicher in der SIM (3) generiert und gespeichert wird, und wobei bei der Personalisierung der SIM (3) vom Mobilfunknetzbetreiber zusammen mit der Bankenapplikation ein aus einem Masterschlüssel und einer SIM-kartenindividuellen Zahl abgeleiteter Initialisierungsschlüssel KIV auf die SIM (3) aufgebracht wird, und aus einer zuvor von der Bank oder dem HBCI-Gateway (7) an den Teilnehmer übermittelten Initialisierungs-PIN mit Hilfe des Initialisierungsschlüssels KIV der teilnehmerspezifische Schlüssel Ksms erzeugt wird.

2. Verfahren nach Anspruch 1, **dadurch gekennzeichnet, dass** als Mobilfunknetz (6) ein GSM-Mobilfunknetz verwendet wird.

3. Verfahren nach einem der Ansprüche 1 oder 2, **dadurch gekennzeichnet, dass** das HBCI-Protokoll vom HBCl-Gateway (7) entpackt und dessen Protokollablauf derart umgewandelt wird, dass eine Verträglichkeit mit der SIM (3) und dem GSM-Mobilfunknetz erwirkt wird, so dass ein Austausch des gewandelten Protokolls mit der SIM (3) möglich ist.

4. Verfahren nach einem der Ansprüche 1 bis 3, dass als Trägerdienst für den Informationsaustausch zwischen HBCI-Gateway (7) und Mobilstation (1) ein GSM Datenübertragungsdienst, insbesondere der Short Message Service, GPRS oder USSD dient.

5. Verfahren nach einem der Ansprüche 1 bis 4, dass auf beiden Teilstrecken eine kryptographische Sicherung realisiert wird.

6. Verfahren nach einem der Ansprüche 1 bis 5, dass die Generierung des teilnehmerspezifischen Schlüssels (Ksms) in der SIM (3) durch Eingabe der Initialisierungs-PIN an der Mobilstation (1) erfolgt.

7. Verfahren nach einem der Ansprüche 1 bis 6, daß die Initialisierungs-PIN zur Generierung des Schlüssels (Ksms) dem Teilnehmer durch die Bank (9) per PIN-Brief mitgeteilt wird.

8. Verfahren nach einem der Ansprüche 1 bis 7, dass der Teilnehmer vor einer Subskription des Dienstes die Daten seiner Bank (9) inklusive der Initialisierungs-PIN erhält.

9. Verfahren nach einem der Ansprüche 1 bis 8, dass bei der Initialisierung der Applikation, d.h. bei Subskription, aus der Initialisierungs-PIN mit Hilfe des KIV der Schlüssel Ksms unter Verwendung der lokalen PIN, der Bankleitzahl und der Kontonummer des Teilnehmers per Triple-DES Verschlüsselung (11) erzeugt wird.

10. Verfahren nach einem der Ansprüche 1 bis 9, dass zur Erzeugung des Ksms im HBCl-Gateway (7) die Initialisierungs-PIN zum Gateway-Betreiber weitergereicht wird.

11. Verfahren nach einem der Ansprüche 1 bis 10, dass die Erzeugung der Initialisierungs-PIN am HBCl-Gateway (7) erfolgt und dieser an die Bank weitergeleitet wird.

12. Verfahren nach einem der Ansprüche 1 bis 11, dass die Authentifikation der beiden beteiligten Stellen, Mobilfunkteilnehmer und HBCI-Gateway (7), durch Wissen über die schriftlich ausgetauschte Initialisierungs-PIN erfolgt.

13. Verfahren nach einem der Ansprüche 1 bis 12, dass zwischen Mobilfunknetzbetreiber und HBCl-Gateway-Betreiber ein Masterkey ausgetauscht wird.

14. Verfahren nach einem der Ansprüche 1 bis 13, dass eine zusätzliche Authentifikation des Teilnehmers über die Kennung seines Mobilanschlusses erfolgt, indem eine Auswertung der Calling-Line-Identification (CLI) erfolgt.

## Claims

1. Method for using standardised bank services via mobile telephone, in which data transmission between a bank server (10) of a bank (9) and a mobile station (1) of a mobile telephone network (6) is based on an HBCI transmission method, wherein an HBCI gateway (7) is connected in the transfer path between the bank server (10) and the mobile station (1), which carries out transformation between the HBCI transmission method used on the bank side and a transmission method used on the mobile telephone side, wherein splitting of the HBCI system on the mobile telephone side into two components, a SIM (3) of the mobile station (1) and the HBCI gateway (7), is effected, and in that two transmission paths are formed, firstly between SIM (3) and HBCI gateway (7) and secondly between HBCI gateway (7) and bank server (10), wherein a security protocol defmed by HBCI is used between the bank server (10) and the HBCI gateway (7) and a second, cryptographic security protocol, which corresponds to a protocol which is reduced as regards the data range but is equivalent in terms of security technology to the HBCI protocol, is used between the HBCI gateway (7) and a subscriber identity module SIM (3) of the mobile station (1), wherein a cryptographic, subscriber-specific key (Ksms) for use in the second security protocol is generated and stored securely in the SIM (3) in accordance with regular personalisation of the SIM (3), and wherein during personalisation of the SIM (3) by the mobile telephone network operator together with the bank application, an initialisation key KIV derived from a master key and a number which is individual to the SIM card, is applied to the SIM (3), and the subscriber-specific key Ksms is produced from an initialisation PIN transferred beforehand from the bank or the HBCI gateway (7) to the subscriber with the aid of the initialisation key KIV.

2. Method according to claim 1, **characterised in that** a GSM mobile telephone network is used as the mobile telephone network (6).

3. Method according to one of claims 1 or 2, **characterised in that** the HBCI protocol is unpacked by the HBCI gateway (7) and its protocol sequence is converted such that compatibility with the SIM (3) and the GSM mobile telephone network is obtained so that an exchange of the converted protocol with the SIM (3) is possible.

4. Method according to one of claims 1 to 3, in that a GSM data-transmission service, in particular the Short Message Service, GPRS or USSD serves as bearer service for the exchange of information between HBCI gateway (7) and mobile station (1).

5. Method according to one of claims 1 to 4, in that cryptographic security is realised on both sections.

6. Method according to one of claims 1 to 5, in that generation of the subscriber-specific key (Ksms) in the SIM (3) is effected by input of the initialisation PIN to the mobile station (1).

7. Method according to one of claims 1 to 6, in that the initialisation PIN for generating the key (Ksms) is communicated to the subscriber by the bank (9) by PIN letter.

8. Method according to one of claims 1 to 7, in that the subscriber receives the data of his bank (9) including the initialisation PIN before subscription of the service.

9. Method according to one of claims 1 to 8, in that during initialisation of the application, that is, on subscription, the key Ksms is produced by triple DES encryption (11) using the local PIN, the bank code and the account number of the subscriber, from the initialisation PIN with the aid of the KIV.

10. Method according to one of claims 1 to 9, in that to produce the Ksms in the HBCI gateway (7), the initialisation PIN is passed to the gateway operator.

11. Method according to one of claims 1 to 10, in that the production of the initialisation PIN is effected at the HBCI gateway (7) and this is relayed to the bank.

12. Method according to one of claims 1 to 11, in that the authentication of the two participating points, mobile telephone subscriber and HBCI gateway (7), is effected by knowing the initialisation PIN which is exchanged in writing.

13. Method according to one of claims 1 to 12, in that a master key is exchanged between mobile telephone network operator and HBCI gateway operator.

14. Method according to one of claims 1 to 13, in that additional authentication of the subscriber is effected via identification of his mobile connection, in that evaluation of the Calling Line Identification (CLI) takes place.

## Revendications

1. Procédé pour utiliser par téléphonie mobile des services bancaires normalisés, selon lequel la transmission de données entre un serveur bancaire (10) d'une banque (9) et une station mobile (1) d'un réseau de téléphonie mobile (6) est basée sur un procédé de transmission HBCI,
étant précisé qu'il est prévu, installée dans la trajectoire de transmission entre le serveur bancaire (10) et la station mobile (1), une passerelle HBCI (7) qui réalise une transformation entre le procédé de transmission HBCI utilisé côté banque et un procédé de transmission utilisé côté réseau mobile, qu'il y a une division du système HCI prévu côté réseau mobile en deux composants, un SIM (3) de la station mobile (1) et la passerelle HBCI (7), et que deux trajets de transmission sont formés, premièrement entre le SIM (3) et la passerelle HBCI (7), et deuxièmement entre la passerelle HBCI (7) et le serveur bancaire (10), qu'on utilise entre le serveur bancaire (10) et la passerelle HBCI (7) un protocole de sécurité défini par HBCI, et entre la passerelle HBCI (7) et un module d'identité d'abonné SIM (3) de la station mobile (1) un second protocole de sécurité cryptographique qui correspond à un protocole à volume de données réduit, mais équivalent du point de vue de la sécurité au protocole HBCI, qu'une clé cryptographique propre à l'abonné (Ksms) à utiliser dans le second protocole de sécurité est générée et stockée de manière sûre dans le SIM (3) après une personnalisation régulière du SIM (3), et que lors de la personnalisation du SIM (3) une clé d'initialisation KIV dérivée d'une clé principale et d'un chiffre individuel de carte SIM est installée sur le SIM (3) conjointement par l'opérateur mobile et l'application bancaire et est produite, à partir d'un numéro PIN d'initialisation transmis précédemment par la banque ou la passerelle HBCI (7) à l'abonné, à l'aide de la clé d'initialisation KIV de la clé Ksms propre à l'abonné.

2. Procédé selon la revendication 1, **caractérisé en ce qu'**on utilise comme réseau mobile (6) un réseau mobile GSM.

3. Procédé selon l'une des revendications 1 ou 2, **caractérisé en ce que** le protocole HBCI est décompressé par la passerelle HBCI (7) et son déroulement de protocole est converti en vue d'une compatibilité avec le SIM (3) et le réseau mobile GSM, de sorte qu'un échange du protocole converti avec le SIM (3) est possible.

4. Procédé selon l'une des revendications 1 à 3, **caractérisé en ce que** ce qui sert de service support pour l'échange d'informations entre la passerelle HBCI (7) et la station mobile (1), c'est un service de transmission de données GSM, en particulier le service de messages courts, GPRS ou USSD.

5. Procédé selon l'une des revendications 1 à 4, **caractérisé en ce qu'**une protection cryptographique est réalisée sur les deux trajets partiels.

6. Procédé selon l'une des revendications 1 à 5, **caractérisé en ce que** la production de la clé propre à l'abonné (Ksms) dans le SIM (3) se fait grâce à l'entrée du numéro PIN d'initialisation au niveau de la station mobile (1).

7. Procédé selon l'une des revendications 1 à 6, **caractérisé en ce que** le numéro PIN d'initialisation destiné à produire la clé (Ksms) est communiqué à l'abonné par la banque (9) par une lettre PIN.

8. Procédé selon l'une des revendications 1 à 7, **caractérisé en ce que** l'abonné reçoit avant une souscription au service les données de sa banque (9), y compris le numéro PIN d'initialisation.

9. Procédé selon l'une des revendications 1 à 8, **caractérisé en ce que** lors de l'initialisation de l'application, c'est-à-dire lors de la souscription, la clé Ksms est produite par chiffrement Triple DES (11) à partir du numéro PIN d'initialisation à l'aide de la clé KIV, grâce à l'utilisation du numéro PIN local, du code bancaire et du numéro de compte de l'abonné.

10. Procédé selon l'une des revendications 1 à 9, **caractérisé en ce que** pour produire la clé Ksms dans la passerelle HBCI (7) le numéro PIN d'initialisation est transmis à l'opérateur de passerelle.

11. Procédé selon l'une des revendications 1 à 10, **caractérisé en ce que** la production du numéro PIN d'initialisation se fait au niveau de la passerelle HBCI (7) et il est transmis à la banque.

12. Procédé selon l'une des revendications 1 à 11, **caractérisé en ce que** l'authentification des deux parties concernées, l'abonné mobile et la passerelle HBCI (7), se fait grâce à la connaissance du numéro PIN d'initialisation échangé par écrit.

13. Procédé selon l'une des revendications 1 à 12, **caractérisé en ce qu'**une clé principale est échangée entre l'opérateur mobile et l'opérateur de passerelle HBCI.

14. Procédé selon l'une des revendications 1 à 13, **caractérisé en ce qu'**une authentification supplémentaire de l'abonné se fait par l'intermédiaire de l'identification de sa connexion mobile, grâce au fait qu'une analyse de l'identification de la ligne d'appel (CLI) a lieu.
